# FASCICULE DE BREVET EUROPEEN

(11) **EP 2 014 404 B1**
(45) Date de publication et mention de la délivrance du brevet: **18.11.2015**
(21) Numéro de dépôt: 08157154.9
(22) Date de dépôt: 29.05.2008
(51) Int. Cl.: B23K 26/08, B23K 9/00, B23K 7/00, B23K 10/00

(54) **Machine de coupage thermique avec surveillance automatique des fins de cycles ou des arrêts intempestifs**
Maschine zum thermischen Trennen, mit automatischer Überwachung des Endes der Bearbeitungszyklen oder der abgebrochenen Zyklen
Thermal cutting machine with automatic supervision of cycle ends or unexpected halts

(30) Priorité: 22.06.2007 FR 0755956
(43) Date de publication de la demande: 14.01.2009
(73) Titulaire: AIR LIQUIDE WELDING FRANCE, 75007 Paris (FR)
(72) Inventeur: Baillot, Edmond, 95550 Bessancourt (FR)
(74) Mandataire: Pittis, Olivier

(56) Documents cités:
- WO-A-02/095323
- DE-A1- 4 239 555
- JP-A- 2000 237 874
- US-A1- 2003 106 880
- US-A1- 2005 103 767

## Description

L'invention concerne une machine de coupage, par plasma, laser ou oxycoupage, munie d'un outil de coupage thermique, par exemple une torche de coupage par jet de plasma, et d'un système d'alarme apte à avertir l'opérateur d'un arrêt de coupe, en particulier d'arrêts intempestifs ou des fins de cycles de coupage ainsi qu'un procédé de coupage au moyen d'une machine de coupage. US-A-2003/106 880 décrit le préambule de la revendication 1.

Dans le domaine du coupage plasma automatique, une part importante du temps de travail de l'opérateur de coupage plasma est dévolue à la surveillance de sa machine, c'est-à-dire du bon déroulement de l'opération de coupage.

Avec la modernisation des installations et leur automatisation de plus en plus poussée, cette surveillance de proximité est devenue inutile. En effet les défauts de fonctionnement graves, c'est à dire ceux pouvant entraîner la dégradation du matériel ou des dangers pour l'opérateur ou son environnement sont traités automatiquement. Par ailleurs, la fiabilité des installations ayant grandement progressé, les réajustements permanents par exemple de la tension de palpage pour le contrôle de la distance torche-tôle ne sont plus nécessaires.

Un opérateur de coupage plasma n'est donc astreint à la surveillance de sa machine que pour des raisons de productivité. Il s'assure essentiellement que la machine est en train de travailler, c'est-à-dire de couper une pièce, et la réapprovisionne ou la relance dans le cas contraire, ou encore procède à un remplacement de composants endommagés, à un réapprovisionnement en gaz...

Il en résulte un niveau de charge de travail faible pour l'opérateur de coupage plasma.

A l'inverse, dans certains cas, l'opérateur ne surveille plus en permanence la machine de coupage durant une opération de coupe car il valorise ce temps en vaquant à d'autres tâches.

Toutefois, le problème qui se pose alors est qu'en fin de coupe normale ou suite à un incident, la machine s'arrête automatiquement et peut rester ainsi sans activité tant que l'opérateur ne sera pas revenu pour par exemple positionner une nouvelle pièce à couper et lancer l'opération de coupage.

On comprend qu'il en résulte alors une perte de productivité de la machine qui peut rester ainsi inactive pendant une durée plus ou moins longue.

Ce problème se pose également en coupage laser ou en oxycoupage, automatisé ou robotisé.

Le document US -A- 2003/106880 propose un système de détection des incendies pouvant survenir sur une machine de coupage au laser. La machine est équipée d'un détecteur de source de feu/ d'incendie qui déclenche une alarme en cas de détection d'incendie, laquelle détection est basée sur la détection de signaux en provenance de capteurs infrarouges, de fumées ou de gaz spécifiques.

Par ailleurs, le document DE -A- 42 39 555 propose une machine de coupage au laser comprenant un système de mesure de l'élévation de température de la pièce découpée. Lorsque le faisceau laser vient impacter la pièce métallique, cette dernière s'échauffe et engendre des fluctuations de la qualité de coupe.

En outre, le document JP -A- 08 288313 propose une machine d'usinage selon le préambule des revendications 1 et 6, dans laquelle la surveillance du bon déroulement des opérations de coupage et formage de semi-conducteurs est opérée au moyen d'une caméra CCD qui recueille les images, lesquelles doivent être ensuite traitées.

Un objet de la présente invention est de libérer l'opérateur de son astreinte à proximité de la machine ou de l'installation de coupage plasma, par faisceau laser ou d'oxycoupage, et donc d'augmenter la productivité de l'opérateur lui-même ainsi que de la machine de coupage dont il a la responsabilité.

Une solution est une machine de coupage comprenant au moins un outil de coupage et des moyens de pilotage aptes à et conçus pour piloter automatiquement l'outil de coupage, et comprenant, en outre :
- des moyens de surveillance automatique de coupe aptes à et conçus pour détecter un arrêt de découpe par l'outil,
- les moyens de surveillance détectant un signal de fin de cycle de coupage ou un signal de 'machine à l'arrêt' représentatifs d'un arrêt de coupe, et
- des moyens d'alarme aptes à et conçus pour avertir l'opérateur lors d'une détection d'arrêt de coupage par lesdits moyens de surveillance de coupe, caractérisé en ce que les moyens de surveillance comprennent un ou plusieurs capteur de débit d'eau de refroidissement, capteur de température, capteur de pression de gaz, capteur de tension (V), capteur de courant (I), capteur d'environnement, notamment un capteur d'ouverture de porte ou une barrière infra-rouge, et/ou contacteur électrique.

Selon le cas, la machine de l'invention peut comprendre l'une ou plusieurs des caractéristiques suivantes :
- l'outil de coupage est une torche à arc, en particulier à arc plasma, un chalumeau d'oxycoupage ou une tête laser.
- l'outil de coupage est monté sur une poutre mobile ou sur un bras de robot.
- les moyens d'alarme génèrent au moins une information d'alerte permettant d'avertir l'opérateur d'un arrêt de coupe, de préférence les moyens d'alarme génèrent une information d'alerte en réponse à la détection par les moyens de surveillance.
- les moyens d'alarme génèrent une information d'alerte sonore, tactile ou visuelle.
- les moyens d'alarme génèrent une information électrique d'alerte et en ce que des moyens de transmission d'information envoient l'information électrique ainsi générée à l'opérateur, en particulier sous la forme d'un e-mail, d'un SMS, de vibrations d'un dispositif portatif, notamment un téléphone portable, ou d'un message téléphonique.

L'invention porte aussi sur un procédé de coupage au moyen d'une machine de coupage équipée d'au moins un outil de coupage, et des moyens de pilotage aptes à et conçus pour piloter automatiquement l'outil pendant une opération de coupage, selon la revendication 6.

L'invention va maintenant être mieux comprise grâce à la description suivante donnée à titre illustratif et portant sur une machine de coupage plasma selon la présente invention.

Durant une opération de coupage plasma automatique mettant en oeuvre une torche à plasma agencée sur une machine de coupage automatique, il est habituel de piloter les trajectoires à suivre, le cycle de coupe, notamment la gestion de l'envoi du courant et des gaz..., à l'aide de moyens de pilotage, telle qu'une CNC pour les trajectoires, un automate programmable pour les paramètres du cycle de coupe, ou d'autres dispositifs de commande analogues.

Ainsi, on a représenté sur la Figure 1 ci-jointe une installation de coupage plasma automatique de ce type avec torche 1 de coupage plasma agencée sur un portique comprenant une poutre 2 et un chariot 3 mobiles.

La poutre 2 se déplace sur des rails parallèles 9 relativement par rapport à une tôle 10 à découper et le chariot 3 portant la torche 1 se déplace sur la poutre 2 et également relativement par rapport à la tôle 10 de manière à pouvoir réaliser les découpes aux formes désirées dans ladite tôle 10.

Les déplacements de la poutre 2 et du chariot 3 sont préférentiellement synchronisés et sont commandés par la CNC 4 avec interface homme/machine.

L'installation comporte aussi, de manière classique, un générateur de courant 5 ; un groupe de refroidissement 6 avec par exemple pompe, échangeur de chaleur, système de détection du débit de retour d'eau.... ; et un système de gestion 7 des gaz, c'est-à-dire permettant la sélection et la régulation des gaz, qui est alimenté en gaz par une ou plusieurs sources de gaz, telles des bouteilles de gaz 8.

Conformément à l'invention, on se sert des informations générées par les machines de coupage plasma, en particulier les informations de « installation en défaut » et « cycle terminé », pour générer un signal d'information vers l'opérateur de coupage plasma. Celui-ci peut donc vaquer à d'autres occupations sachant qu'une surveillance permanente et continue de son installation a lieu.

Selon le procédé de l'invention, on détecte un arrêt de coupe correspondant à une fin de cycle de coupage, ou un arrêt de la machine de coupage à l'aide de moyens de surveillance.

A cette fin, on peut utiliser des informations issues des moyens de pilotage eux-mêmes, notamment de la console numérique ou CNC 4, d'un automate programmable, de l'électronique dédiée à la machine ou encore d'un ordinateur industriel connecté à la machine, ou alors des informations issues de capteurs ou contacteurs spécifiques.

Ainsi, on peut agencer un ou plusieurs capteurs et/ou un ou plusieurs contacteurs électriques sur la machine, sur l'outil ou sur les matériels périphériques utilisés pour mettre en oeuvre le procédé, tel que générateur de courant, sources de gaz ...

Par exemple, un capteur de débit d'eau de refroidissement permet de surveiller la présence ou l'absence d'eau de refroidissement envoyée depuis le groupe de refroidissement 6 vers la torche. En cas d'absence de débit due à un arrêt d'utilisation de l'outil 1 ou à un incident, telle une rupture de canalisation ou autre, l'opérateur est immédiatement averti du problème et peut alors intervenir rapidement.

On peut également utiliser d'autres éléments, tel que par exemple:
- un capteur de température peut être agencé au niveau du générateur de courant 5 pour détecter toute élévation inhabituelle de la température du transformateur primaire du hâcheur dudit générateur 5,
- un capteur de pression de gaz, de type tout-ou-rien ou proportionnel, peut être utilisé pour détecter tout défaut d'alimentation en gaz de coupe, en particulier au niveau du système de gestion des gaz 7.
- un capteur de tension (V) ou de courant (I) peut être utilisé pour détecter les sorties de la torche 1 au-delà des limites/bords de la tôle 10, une torche 1 éteinte (arc plasma arrêté), une tension ou un courant anormalement élevé ou, à l'inverse, trop bas.
- un contacteur électrique de choc de torche peut permettre de détecter tout débrayage physique de la liaison torche 1/axe vertical Z.

Lorsqu'on choisir d'utiliser des informations issues par exemple de la CNC 4, on peut se servir de signaux de coupe « normal » ou de signaux de coupe « problématique » générés au sein de la CNC 4.

Par exemple, lors d'un coupage plasma « normal », c'est-à-dire sans incident, la CNC 4 génère elle-même un signal interne de « trajectoire terminée » qui équivaut à une coupe achevée. On peut se servir de ce signal pour avertir l'opérateur.

A l'inverse, en cas de coupage « anormal », c'est-à-dire avec incident, la CNC 4 génère une information de problème du type « torche ne se déplace pas » ou analogue. Là encore, il est possible de se servir de ce signal pour alerter l'opérateur.

Le signal d'alerte peut être de toute nature : sonore, visuel ou tactile, et se produire sur ou à proximité de la machine ou être déporté de celle-ci, ou plus moderne et prendre la forme d'un envoi automatique d'e-mail, d'un SMS, la diffusion de messages téléphoniques automatiques ou le déclenchement de vibrations d'un dispositif portatif, tel un téléphone portable ou analogue.

La Figure 2 est un schéma-bloc montrant les communications existantes ou possibles entre les différents éléments d'une installation de coupage selon la Figure 1, à savoir le système de gestion 11 de l'installation de coupage plasma, le générateur de courant 5, le groupe de refroidissement 6, le dispositif de détection 13 des chocs-torche, l'alimentation en haute tension d'amorçage 12, le système de gestion des fluides 8, le système de gestion 15 de l'axe Z, c'est-à-dire de déplacement en rapprochement ou en éloignement de la torche 1 par rapport à la surface supérieure de la tôle 10 à couper, et le système de gestion de la trajectoire de coupe ou CNC 4 avec interface homme/machine 14, qui sont sous environnement PC du type Windows^{™} ou analogue.

L'invention présente ou conduit à plusieurs avantages, à savoir notamment :
- une augmentation de la productivité par réduction des charges en personnel et augmentation du taux de charge des machines pour lesquels les opérateurs n'effectuaient déjà plus de surveillance de proximité mais dont les installations se retrouvaient en conséquence fréquemment en défaut d'activité, et
- une amélioration du cadre de travail de l'opérateur puisque celui-ci, n'étant plus astreint à proximité de la machine, n'a plus à en subir les nuisances : visuelles, sonores, mauvaise qualité de l'air (bruits, fumées de découpe,...).

L'exemple de réalisation suivant n'est nullement limitatif et ne vise qu'à illustrer l'invention.

### Exemple

A titre d'exemple, on va détailler ci-après l'enchaînement des étapes d'une détection d'un arrêt de la découpe jusqu'à la génération d'un signal d'information de l'opérateur sur une installation de coupage plasma selon la Figure 1 en cours de découpe, c'est-à-dire réalisant une série de pièces, alors qu'une canalisation de liquide de refroidissement (eau) alimentant la torche éclate.

Les étapes suivantes détaillent le type d'évènements et de transmissions d'informations qui circulent dans la machine de coupage plasma selon le procédé de la présente invention :
- chute du débit d'eau dans la canalisation de retour d'eau,
- déclenchement du contacteur de débit d'eau trop faible,
- traitement du défaut d'eau par le générateur de courant avec arrêt du courant, arrêt du groupe de refroidissement et envoi d'un message « défaut d'eau de refroidissement » sur la ligne de communication entre le générateur 5 et le système de contrôle de l'installation de coupage plasma 11 de la Fig. 2,
- traitement de l'information « défaut d'eau de refroidissement » par le système de contrôle de l'installation 11 de coupage plasma avec arrêt brusque de tous les périphériques de l'installation de coupage plasma, notamment l'axe Z 15 et du système de gestion 8 des fluides ; envoi d'une information de défaut de l'installation de coupage plasma au système de gestion de la trajectoire, c'est-à-dire la CNC 4 ; et remontée d'un message d'erreur à l'interface homme/machine 14 de la machine de coupage plasma,
- traitement de l'information de défaut par la CNC 4 avec arrêt des déplacements en cours, notamment des déplacements de la poutre 2 et du chariot 3 portant la torche 1,
- traitement de l'information de défaut par l'interface homme/machine 14 avec affichage d'un message d'erreur signalant, voire expliquant, le problème de refroidissement de la torche 1.
- dans l'environnement PC 16 de l'interface homme/machine 14, envoi d'un SMS à un numéro préenregistré par l'opérateur de coupage plasma, contenant le message d'erreur affiché à l'écran de l'interface homme/machine 14, grâce à un service de messagerie adapté.
- l'opérateur qui reçoit le message peut alors immédiatement se rendre à l'installation en question, réparer la canalisation d'eau et remettre l'installation en route et ce, en minimisant le temps perdu.

L'invention est aussi parfaitement applicable aux machines de coupage par faisceau laser ou encore d'oxycoupage.

## Revendications

1. Machine de coupage comprenant au moins un outil de coupage et des moyens de pilotage aptes à et conçus pour piloter automatiquement l'outil de coupage, et comprenant, en outre, des moyens de surveillance automatique de coupe **caractérisée en ce que** lesdits moyens de surveillance automatique et de coupe sont aptes à et conçus pour détecter un arrêt de découpe par l'outil, les moyens de surveillance détectant un signal de fin de cycle de coupage ou un signal de machine à l'arrêt représentatifs d'un arrêt de coupe, et des moyens d'alarme aptes à et conçus pour avertir l'opérateur lors d'une détection d'arrêt de coupage par lesdits moyens de surveillance de coupe, les moyens de surveillance comprennent un ou plusieurs capteur de débit d'eau de refroidissement, capteur de température, capteur de pression de gaz, capteur de tension (V), capteur de courant (I), capteur d'environnement ou contacteur électrique.

2. Machine selon la revendication 1, **caractérisée en ce que** l'outil de coupage comprend une torche à arc plasma, un chalumeau d'oxycoupage ou une tête laser.

3. Machine selon l'une des revendications 1 ou 2, **caractérisée en ce que** les moyens d'alarme génèrent au moins une information d'alerte permettant d'avertir l'opérateur d'un arrêt de coupe, de préférence les moyens d'alarme génèrent une information d'alerte en réponse à la détection par les moyens de surveillance.

4. Machine selon l'une des revendications 1 à 3, **caractérisée en ce que** les moyens d'alarme génèrent une information d'alerte sonore, tactile ou visuelle.

5. Machine selon l'une des revendications 1 à 4, **caractérisée en ce que** les moyens d'alarme génèrent une information électrique d'alerte et **en ce que** des moyens de transmission d'information envoient l'information électrique ainsi générée à l'opérateur, en particulier sous la forme d'un e-mail, d'un SMS, de vibrations d'un dispositif portatif, notamment un téléphone portable, ou d'un message téléphonique.

6. Procédé de coupage au moyen d'une machine de coupage équipée d'au moins un outil de coupage, et des moyens de pilotage aptes à et conçus pour piloter automatiquement l'outil pendant une opération de coupage, dans lequel :
a) on réalise une découpe d'au moins une pièce au moyen de l'outil piloté par les moyens de pilotage,
b) durant l'étape a), on surveille automatiquement le déroulement de la coupe,
c) on génère une alarme sonore, tactile ou visuelle et/ou on envoie une information d'alerte à l'opérateur lorsqu'à l'étape b), un arrêt de coupe est détecté, ledit arrêt de coupe correspondant à une fin de cycle de coupage ou un arrêt de la machine de coupage, et on détecte un arrêt de coupe correspondant à la génération par une CNC d'un signal de « trajectoire terminée » et à l'étape b), la surveillance est opérée au moyen d'un ou plusieurs capteur de débit d'eau de refroidissement, capteur de température, capteur de pression de gaz, capteur de tension (V), capteur de courant (I), capteur d'environnement ou contacteur électrique.

7. Procédé selon la revendication 6, **caractérisé en ce que**, lorsqu'on détecte un arrêt de coupe, une information d'alerte est transmise à l'opérateur par SMS, e-mail, par vibration d'un dispositif portatif ou par téléphone.

8. Procédé selon l'une des revendications 6 ou 7, **caractérisé en ce que** l'outil de coupage est une torche de coupage plasma, un chalumeau d'oxycoupage ou une tête laser.

## Patentansprüche

1. Schneidemaschine, umfassend wenigstens ein Schnittwerkzeug und Ansteuermittel, die angepasst und geeignet sind, um das Schnittwerkzeug automatisch anzusteuern, und ferner umfassend Mittel zur automatischen Schnittüberwachung, **dadurch gekennzeichnet, dass** die Mittel zur automatischen Schnittüberwachung angepasst und eingerichtet sind, um eine Schnittunterbrechung durch das Werkzeug zu erkennen, wobei die Überwachungsmittel ein Signal über das Ende des Schneidezyklus oder ein Signal über den Maschinenstillstand detektieren, das für eine Schnittunterbrechung repräsentativ ist, und Alarmmittel, die dafür angepasst und dazu eingerichtet sind, den Bediener bei einer Detektion einer Schnittunterbrechung durch die Schnittüberwachungsmittel zu alarmieren, wobei die Überwachungsmittel einen oder mehrere Kühlwassermengensensoren, Temperaturfühler, Gasdruckfühler, Spannungssensoren (V), Stromsensoren (I), Umgebungssensoren oder elektrischen Schütze umfassen.

2. Maschine nach Anspruch 1, **dadurch gekennzeichnet, dass** das Schnittwerkzeug einen Plasmabogenbrenner, einen Autogen-Schneidbrenner oder einen Laserkopf umfasst.

3. Maschine nach einem der Ansprüche 1 oder 2, **dadurch gekennzeichnet, dass** die Alarmmittel wenigstens eine Warninformation erzeugen, die ermöglicht, den Bediener über eine Schnittunterbrechung zu alarmieren, wobei die Alarmmittel vorzugsweise eine Alarminformation in Reaktion auf die Detektion durch die Überwachungsmittel erzeugen.

4. Maschine nach einem der Ansprüche 1 oder 3, **dadurch gekennzeichnet, dass** die Alarmmittel eine akustische, tastbare oder visuelle Alarminformation erzeugen.

5. Maschine nach einem der Ansprüche 1 bis 4, **dadurch gekennzeichnet, dass** die Alarmmittel eine elektrische Alarminformation erzeugen und dass Informationsübertragungsmittel die so erzeugte elektrische Information an den Bediener senden, insbesondere in Form einer E-Mail, einer SMS, von Vibrationen einer tragbaren Vorrichtung, insbesondere eines Mobiltelefons, oder einer telefonischen Nachricht.

6. Schneideverfahren mit Hilfe einer Schneidemaschine, die mit wenigstens einem Schneidemittel versehen ist, und Ansteuermittel, die angepasst und dazu eingerichtet sind, um das Werkzeug während eines Schneidevorgangs automatisch anzusteuern, in dem
a) ein Zuschnitt wenigstens eines Werkstücks mit Hilfe des durch die Ansteuermittel angesteuerten Werkzeugs realisiert wird,
b) während Schritt a) die Entwicklung des Zuschnitts automatisch überwacht wird,
c) ein akustischer, tastbarer oder visueller Alarm erzeugt wird und/oder eine Alarminformation an den Bediener gesendet wird, wenn in Schritt b) eine Schnittunterbrechung detektiert wird, wobei die Schnittunterbrechung einem Ende des Schneidezyklus oder einem Stillstand der Schneidemaschine entspricht,
und eine Schnittunterbrechung detektiert wird, die der Erzeugung eines Signals "Bahn beendet" durch eine CNC-Steuerung entspricht, und in Schritt b) die Überwachung mit Hilfe eines oder mehrerer Kühlwassermengensensoren, Temperaturfühler, Gasdruckfühler, Spannungssensoren (V), Stromsensoren (I), Umgebungssensoren oder elektrischen Schütze durchgeführt wird.

7. Verfahren nach Anspruch 6, **dadurch gekennzeichnet, dass**, wenn eine Schnittunterbrechung detektiert wird, eine Alarminformation per SMS, E-Mail, per Vibration einer tragbaren Vorrichtung oder per Telefon an den Bediener gesendet wird.

8. Verfahren nach einem der Ansprüche 6 oder 7, **dadurch gekennzeichnet, dass** das Schnittwerkzeug ein Plasmabogenbrenner, ein Autogen-Schneidbrenner oder ein Laserkopf ist.

## Claims

1. Cutting machine comprising at least one cutting tool and control means capable of and designed to automatically control the cutting tool, and further comprising automatic cutting monitoring means, **characterised in that** said automatic monitoring means and cutting means are capable of and designed to detect a halt in cutting by the tool, the monitoring means detecting an end of cutting cycle signal or a halted machine signal representative of a cutting halt, and alarm means capable of and designed to warn the operator when a cutting halt has been detected by said cutting monitoring means, the monitoring means comprising one or more cooling water flow sensors, temperature sensors, gas pressure sensors, voltage (V) sensors, current (I) sensors, environment sensors or electrical contactors.

2. Machine according to claim 1, **characterised in that** the cutting tool comprises a plasma arc torch, an oxyacetylene cutting torch or a laser head.

3. Machine according to either claim 1 or claim 2, **characterised in that** the alarm means generate at least one piece of warning information making it possible to warn the operator of a cutting halt; preferably, the alarm means generate warning information in response to detection by the monitoring means.

4. Machine according to any of claims 1 to 3, **characterised in that** the warning means generate audible, tactile or visual warning information.

5. Machine according to any of claims 1 to 4, **characterised in that** the warning means generate electrical warning information and **in that** information transmission means send the electrical information thus generated to the operator, particularly in the form of an email, an SMS, vibration of a portable device, particularly a mobile telephone, or a telephone message.

6. Cutting method using a cutting machine equipped with at least one cutting tool, and control means capable of and designed to automatically control the tool during the cutting operation, wherein:
a) at least one part is cut using the tool controlled by the control means,
b) during step a), the progress of the cutting operation is automatically monitored,
c) an audible, tactile or visual alarm is generated and/or warning information is sent to the operator when, during step b), a cutting halt is detected, said cutting halt corresponding to the end of the cutting cycle or halting of the cutting machine; and a halt cutting corresponding to the generation by a CNC of a "path finished" signal is detected and, in step b), monitoring takes place by means of one or more cooling water flow sensors, temperature sensors, gas pressure sensors, voltage (V) sensors, current (I) sensors, environment sensors or electrical contactors.

7. Method according to claim 6, **characterised in that**, when a cutting halt is detected, warning information is transmitted to the operator by SMS, email, vibration of a portable device or by telephone.

8. Method according to either claim 6 or claim 7, **characterised in that** the cutting tool is a plasma cutting torch, an oxyacetylene cutting torch or a laser head.
